# EUROPEAN PATENT APPLICATION

(11) **EP 1 857 789 A2**
(43) Date of publication of application: **21.11.2007**
(21) Application number: 07100619.1
(22) Date of filing: 16.01.2007
(51) Int. Cl.: G01J 1/58, G01J 3/10

(54) **Light source including quantum dot material and apparatus including same**

(30) Priority: 15.05.2006 US 433991
(71) Applicant: X-Rite, Incorporated, MI 49512A MI Michigan Grandville (US)
(72) Inventor: Peterson, Steven H., Martin, Michigan MI 49070 (US); Bylsma, Richard B., Ada, Michigan MI 49301 (US)
(74) Representative: Finnie, Peter John

(57) **Abstract**

A light source (10) comprising a light emitting device (12) and quantum dot material (20) is disclosed. According to various embodiments, the quantum dot material (20) is positioned relative to the light emitting device (12) such that the quantum dot material (10) absorbs light emitted from the light emitting device and converts the wavelengths of photons emitted from the light emitting device to longer wavelengths. Judicious selection of the quantum dot material allows the emission spectra of the light source (10) to be tailored to meet the needs of a particular illumination application, and avoids the drawbacks associated with the use of interference filters because the quantum dot material (20) can upconvert the wavelengths emitted from the light emitting device (12) such that the emission spectra of the light source (10) can include wavelengths that are not emitted by the light emitting device (12) itself.

## Description

### Background to the Invention

In spectroscopy or color measurement applications which characterize the transmission, absorption, emission or reflection of a target material (such as ink on paper, paint on metal, dyes on cloth, etc.), an illumination source must be present, as well as an apparatus to measure the reflected, transmitted or emitted light. One method for providing the illumination is using light emitted from light emitting diodes (LEDs). To adequately characterize the material properties of the target that would be seen by a human observer, illumination over the entire visible wavelength range from 400nm to 700nm is desirable. Individual white or chromatic LEDs and even multiple-LED assemblies, however, often do not provide adequate intensity at all wavelengths in this range.

One known solution for tailoring the emission spectra of a LED to cover the desired illumination range is to use an interference filter with the LED to filter out the unwanted wavelengths. Such an arrangement, however, is not practical where the source (e.g., the LED) does not emit sufficient energy at the desired wavelength. Also, such arrangements can be inefficient for certain applications because much of the energy emissions from the source may be filter out and therefore wasted.

### Summary of the Invention

According to a first aspect of the present invention there is provided a light source comprising: a light emitting device; and, quantum dot material positioned to absorb photons of light emitted by the light emitting device and re-emit at least a portion of these absorbed photons at longer wavelengths.

The quantum dot material is positioned relative to the light emitting device such that the quantum dot material absorbs light emitted from the light emitting device and converts the wavelengths of at least a portion of the photons emitted from the light emitting device to longer wavelengths. Judicious selection of the quantum dot material allows the emission spectra of the light source to be tailored to meet the needs of a particular illumination application, and avoids the drawbacks associated with the use of interference filters because the quantum dot material can upconvert the wavelengths emitted from the light emitting device such that the emission spectra of the light source can include wavelengths that are not emitted by the light emitting device itself.

According to various implementations, the quantum dot material may comprise a host material and a plurality of quantum dot material intra-layers suspended in the host material, wherein the quantum dot material intra-layers have different light absorption/emission characteristics. Also, the quantum dot material may be positioned directly on the light emitting device, or it may be a part of a quantum dot material assembly, spaced apart from the light emitting device, that comprises an optically transparent substrate and one or more quantum dot material layers. The quantum dot material layer(s) may comprise quantum dot material and the host material, and the assembly is positioned such that light from the light emitting device is absorbed by the quantum dot material layer(s) on the substrate.

In addition, the light emitting device may comprise one or a number of light emitting diodes (LEDs), one or a number of lasers, one or a number of laser diodes, a lamp, or a combination of these light emitting devices.

The quantum dot material may be chosen such that the emission spectra of the light source meets a desired emission spectra profile. For example, the emission spectra profile may correspond to an adopted industry illumination standard, such as an incandescent illumination standard, a daylight illumination standard or a fluorescent illumination standard. Also, the quantum dot material may be chosen such that the emission spectra of the light source may cover a narrow band of wavelengths, for example.

In addition, the light source may comprise a lower lens, located between the light emitting device and the quantum dot material, for collecting and focusing light from the light emitting device onto the quantum dot material, and/or an upper lens, wherein the quantum dot material is between the light emitting device and the upper lens, for collecting and focusing light from the quantum dot material on a target sample material.

According to a second aspect of the present invention, there is provided an apparatus for measuring a spectroscopic property of a target material comprising: the light source of the first aspect for emitting light photons to impinge upon the target material; and, an optical radiation sensing device for detecting at least one of light reflected by or transmitted through the target material.

Thus, the apparatus may comprise any suitable embodiment of the above-described light source for emitting light photons to impinge upon the target material, and an optical radiation sensing device for detecting light reflected by or transmitted through the target material. The apparatus may, of course, comprise other components.

### Brief Description of the Drawings

Examples of the present invention will now be described in detail with reference to the accompanying drawings, in which:
Figures 1 and 3-6 are diagrams of a light source according to various embodiments of the present invention;
Figure 2 is a diagram of the quantum dot material layer according to various embodiments of the present invention; and
Figure 7 is a block diagram of a spectroscopic apparatus according to various embodiments of the present invention.

### Detailed Description

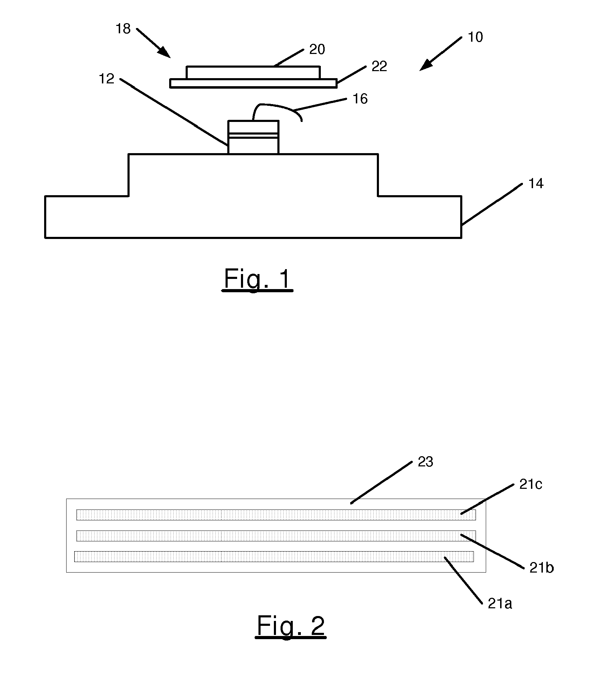

Figure 1 is a diagram of a light source according to various embodiments of the present invention. In the illustrated embodiment, the light source 10 includes a light emitting device 12 mounted on a header 14. In one embodiment, the light emitting device 12 may be a light emitting diode (LED) including a lead wire 16 that allows the LED to be biased so that it will emit light. The LED may emit photons in the ultraviolet and/or visible portions of the optical spectrum. In other embodiments, the light emitting device 12 may be, for example, a laser, a laser diode, multiple LEDs, a lamp, or combinations thereof.

The light source 10 illustrated in Figure 1 also includes, in the path of the emitted light from the light emitting device 12, an assembly 18 comprising quantum dot material layer 20 placed on a substrate 22. The quantum dot material layer 20 may comprise quantum dot material incorporated in an inert host material, such as epoxy, resin, gel, etc.

Quantum dots have the characteristic that by adjusting the size and chemistry of the quantum dot particles, the optical properties of the material, such as light absorption or light emission, can be tailored to meet desired characteristics. For example, quantum dot material, which may be made from CdSe, CdS, ZnS or other materials, may have absorption in the blue and UV portion of the optical spectrum and emission wavelengths in the visible part of the optical spectrum. This allows these materials to be used for a variety of spectroscopic applications which require illumination in the visible spectral region.

In the light source 10 of Figure 1, the quantum dot material layer 20 may absorb all or part of the light from the light emitting device 12 that impinges on the quantum dot material layer 20. That energy may then be re-emitted at longer wavelengths (i.e., lower energy). That is, the light emitting device 12 may optically pump the quantum dot material layer 20, which may convert at least a portion of the short wavelength photons emitted by the light emitting device 12 into longer wavelength photons. By correctly selecting the quantum dot material, therefore, a desired illumination wavelength can be obtained.

According to various embodiments, the quantum dot material layer 20 may comprise a composite of different quantum dot intra-layers 21 a-c suspended in the host material 23, as shown in Figure 2, each intra-layer 21a-c having different absorption/emission characteristics. For example, the first quantum dot material intra-layer 21 a may convert a portion of the light from the light emitting device 12 to a certain, longer wavelength range, and the second quantum dot material intra-layer 21 b may convert a portion of that light to an even longer wavelength range, and so on. In another embodiment, the second intra-layer 21 b may transmit the longer wavelengths emitted by the first intra-layer 21 a, and may also convert another portion of the shorter wavelengths from the light emitting device to a second, higher wavelength, and so on. In addition, the thicknesses of the various quantum dot material intra-layers 21 a-c could also be selected to tune the intensity of the emitted light. This may allow the illumination spectra to be further tailored to have specific features, such as multiple sharp emission peaks or broad band illumination that covers a wide range of the optical spectrum. Also, one or more of the intra-layers 21 a-c may comprise phosphors rather than quantum dot material according to various embodiments.

The substrate 22 on which the quantum dot material layer 20 is placed may be optically transparent such that all or most of the light from light emitting device 12 passes through the substrate 22 and impinges on the quantum dot material layer 20. According to various embodiments, the substrate 20 may be made from glass, such as sapphire glass. The substrate 22 may be spaced-apart from the light emitting device 12 as shown in Figure 1 and may be supported by a frame (not shown), for example. The quantum dot assembly 18 and the light emitting device 12 may additionally be encased in a casing (not shown).

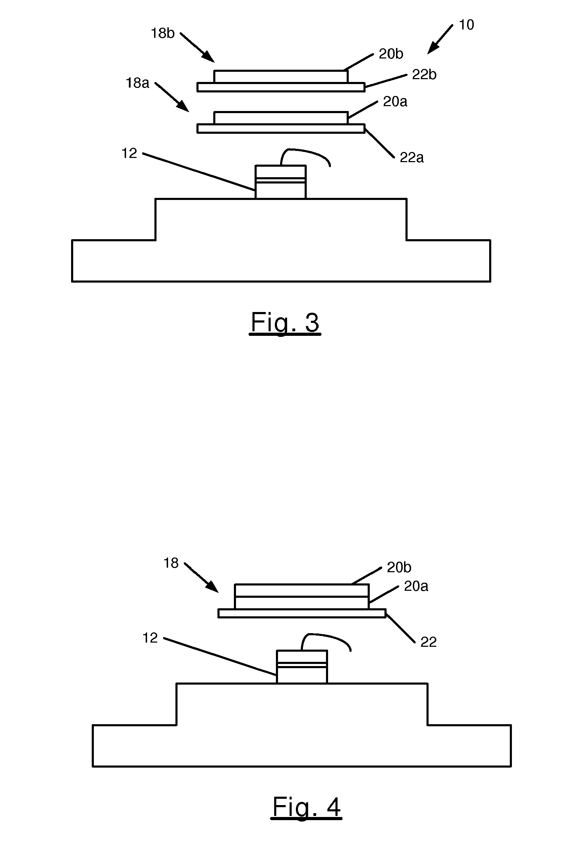

According to various embodiments, the light source 10 may comprise multiple quantum dot assemblies 18. Figure 3, for example, shows an embodiment of the light source 10 comprising two quantum dot assemblies 18a-b. In such an arrangement, the quantum dot material layer 20a of one of the assemblies 18a may have differently tailored absorption/emission characteristics than the quantum dot material layer 20b of the other assembly 18b. That way, for example, like the embodiment discussed above where multiple quantum dot material intra-layers 21 are suspended in a common host material, the first quantum dot material layer 20a may convert a portion of the light from the light emitting device 12 to a certain, longer wavelength range, and the second quantum dot material layer 20b may convert a portion of that light to an even longer wavelength range, and so on. According to another embodiment, the second quantum dot material layer 20b may transmit the longer wavelengths emitted from the first quantum dot material layer 20a, and convert another portion of the shorter wavelengths emitted from the light emitting device 12 to another, longer wavelength range, which may be longer or shorter than the wavelengths emitted by the first quantum dot material layer 20a, and so on. In this particular embodiment the light emitted from layer 20a will be transmitted through layer 20b, but both layers will absorb light photons emitted from the light emitting device. The thicknesses of the various quantum dot material layers 20a,b could also be selected to tune the intensity of the emitted light. In addition, one or more of the quantum dot material layers 20a,b may comprise a composite of different quantum dot intra-layers or phosphors suspended in the host material, each which different absorption/emission characteristics, as described above in connection with Figure 2.

In other embodiments, rather than using two (or more) substrates 22a,b as in the embodiment of Figure 2, the two (or more) quantum dot material layers 20a,b may be applied sequentially to a common substrate 22, as shown in Figure 4.

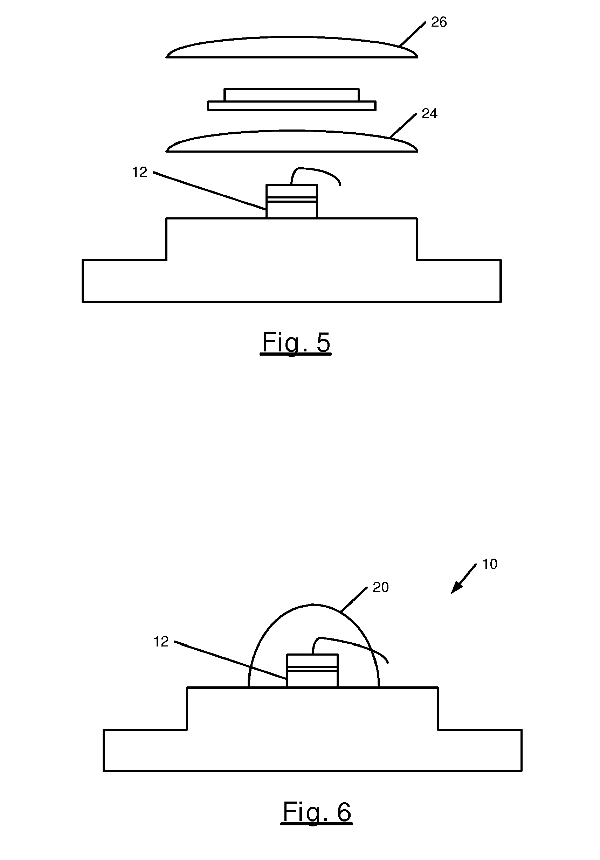

According to other embodiments, as shown in Figure 5, the light source 10 may include one or more lenses, such as a lens 24 positioned between the light emitting device 12 and the quantum dot material assembly 18 and/or a lens 26 after the quantum dot material assembly 18. The lens 24 may collect and focus light from the light emitting device 12 onto the quantum dot material assembly 18, which may provide more efficient use of the light energy from the light emitting device 12. The lens 26 may collimate the light exiting the quantum dot material assembly 18. Also, the lens 26 may collect and focus light emitted from the quantum dot material on a target sample to be illuminated by the light source 10. This may further enhance the efficiency of the light source 10.

In other embodiments, as shown in Figure 6, the quantum dot material layer 20 may be applied onto the light emitting device 12, rather than placing it on a substrate as per the embodiments of Figures 1-5.

By careful selection of various options, including the characteristics of the quantum dot material layer(s) 20 (including the number and characteristics of the intra-layers 21, if any), the number of quantum dot material layers 20, and the light emission spectral characteristics of the light emitting device 12, a desired emission spectra profile may be produced (or at least approximated). For example, in one embodiment, the light emitting device 12 may emit photons in the ultraviolet portion of the optical spectrum (wavelengths < 400 nm), and the quantum dot material assembly 18 may convert the pump light to greater wavelengths at sufficient intensities over a broad spectrum, such as wavelengths of 400 nm to 700 nm. According to another embodiment, the light emitting device 12 may emit photons in the blue portion of the optical spectrum (wavelengths between 400 nm and 425 nm), and the quantum dot material assembly 18 may emit light at sufficient intensities over the 400 nm to 700 nm range.

According to other embodiments, the quantum dot material layer(s) 20 may be chosen such that the emission spectra of the light source 10 is limited to a narrow band of wavelengths. As used herein, "narrow band" means less than or equal to 50 nm full width at half maximum (FWHM). That is, when the emission spectra of the light source 10 is a narrow band, the difference between the wavelengths at which emission intensity of the light source is half the maximum intensity is less than or equal to 50 nm.

According to other embodiments, the quantum dot material layer(s) 20 may be chosen such that the emission spectra of the light source corresponds to a known spectral emission standard such as, for example, incandescent standards (e.g., CIE standard illuminant A), daylight standards (e.g., CIE standard illuminant D65 or D50), fluorescent standards (e.g., CIE standard illuminant F2 or F11), or other defined standards.

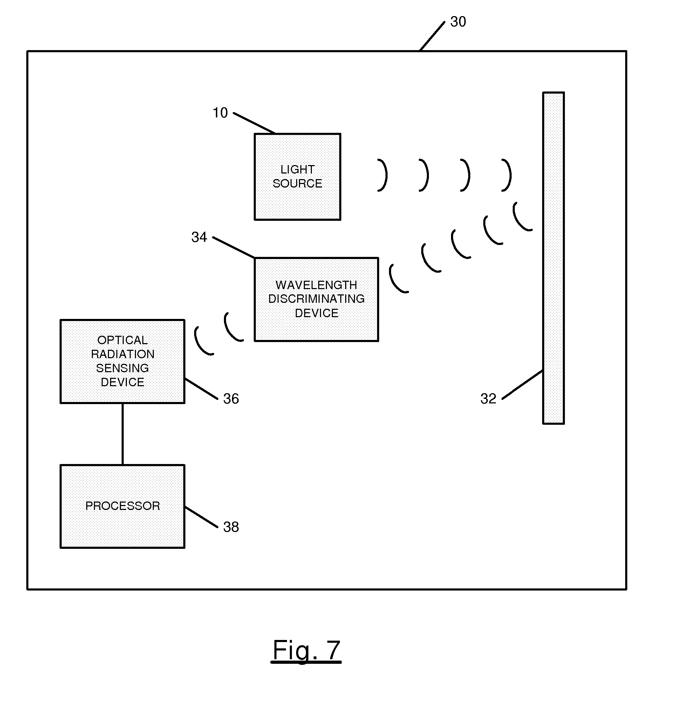

One or more of the light sources 10 described above may be employed, for example, in a color measurement or spectroscopic apparatus to measure the transmission, absorption, emission and/or reflection properties of a material. Figure 7 is a simplified block diagram of a color measurement or spectroscopic apparatus 30 according to various embodiments of the present invention that comprises one light source 10 for illuminating a target material 32, a wavelength discriminating device 34, and an optical radiation sensing device 36. Reflected light from the target material 32 can be filtered by the wavelength discriminating device 34, which may be, for example, a prism, diffraction grating, holographic grating, or assembly of optical filters. The optical radiation sensing device 36, which may comprise, for example, one or a number of photodiodes, may sense the light from the material 32 passing through the wavelength discriminating device 34. A processor 38 in communication with the optical radiation sensing device 36 may determine the transmission, absorption, emission or reflection of the material 32. Also, the system 30 may include other optical components (not shown), such as refractive or diffractive lenses or mirrors, for either directing light from the light source 10 onto the material 32 and/or directing light from the material 32 to the wavelength discriminating device 34.

In another embodiment, the wavelength discriminating device 34 and the optical radiation sensing device 36 may be positioned on the opposite side of the target material 32 from the illumination source 10. That way, the optical radiation sensing device 36 may detect light transmitted through the target material 32. Also, in yet another embodiment, the apparatus 30 may comprise one optical radiation sensing device in front of the target 32 for detecting light reflected by the target 32 and a second optical radiation sensing device behind the target for detecting light transmitted through the target 32.

One or more of the light sources 10 could be used in other equipment, including, for example, a printing press, an ink jet printer, or other color-based process monitoring equipment.

## Claims

1. A light source (10) comprising:
a light emitting device (12); and,
quantum dot material (20) positioned to absorb photons of light emitted by the light emitting device (12) and re-emit at least a portion of these absorbed photons at longer wavelengths.

2. The light source (10) of claim 1, wherein the quantum dot material (20) comprises:
a host material (23); and,
a plurality of quantum dot material intra-layers (21 a,21 b,21 c) suspended in the host material (23).

3. The light source (10) of claim 2, wherein each of the plurality of quantum dot material intra-layers (21 a,21 b,21 c) have different light emission characteristics.

4. The light source (10) of any preceding claim, comprising a first quantum dot material assembly (18), wherein the first quantum dot material assembly comprises:
a first substrate (22) which is optically transparent; and,
a first quantum dot material layer (20) comprising the quantum dot material (20), the first quantum dot material layer (20) being located on the first substrate (22).

5. The light source (10) of claim 4, wherein the quantum dot material assembly (18) comprises one or more further quantum dot material layers (20b) located on the first quantum dot material layer (20a) and comprising quantum dot material, wherein the emission characteristics of the further quantum dot material layers (20b) are different from the emission characteristics of the first quantum dot material layer (20a).

6. The light source (10) of claim 4 or claim 5, further comprising a second quantum dot material assembly (18b), wherein the first quantum dot material assembly (18a) is located between the light emitting device (12) and the second quantum dot material assembly (18b), and wherein the second quantum dot material assembly (18b) comprises:
a second substrate (22b); and,
a second quantum dot material layer (20b) comprising quantum dot material, the second quantum dot material layer (20b) being located on the second substrate (22b) and having different emission characteristics from those of the first quantum dot material layer (20a) in the first quantum dot material assembly (18a).

7. The light source (10) of claim 6, wherein the second quantum dot material layer (20b) absorbs photons of light re-emitted by the first quantum dot material layer (20a) and re-emits at least a portion of these absorbed photons at even longer wavelengths.

8. The light source (10) of claim 6, wherein the second substrate (22b) is optically transparent and the second quantum dot material layer (20b) transmits photons of light re-emitted by the first quantum dot material layer (20a), and wherein the second quantum dot material layer (20b) absorbs photons of light emitted by the light emitting device (12) and re-emits at least a portion of these absorbed photons at longer wavelengths which are different to the wavelengths of the photons of light re-emitted by the first quantum dot material layer (20a).

9. The light source (10) of any one of claims 4 to 8, comprising one or more further quantum dot material assemblies (18b), each further quantum dot material assembly comprising an optically transparent substrate (22b) and one or more quantum dot material layers (20b) comprising quantum dot material located on the substrate (22b).

10. The light source (10) of one of claims 4 to 9, further comprising a lower lens (24) between the light emitting device (12) and the first quantum dot material assembly (18).

11. The light source (10) of any one of claims 4 to 10, further comprising an upper lens (26), such that the first quantum dot material assembly (18) is between the light emitting device and the upper lens (26).

12. The light source (10) of any one of claims 1 to 3, wherein the quantum dot material (20) is positioned on the light emitting device (12).

13. The light source (10) of any one of claims 2 to 12, wherein a thickness of each of the quantum dot material layers (20a,20b) or intra-layers (21 a,21 b,21 c) is selected to tune the intensity of light emitted by the light source.

14. The light source (10) of any preceding claim, wherein the light emitting device (12) comprises at least one LED.

15. The light source (10) of any preceding claim, wherein the light emitting device (12) comprises at least one laser.

16. The light source (10) of any preceding claim, wherein the light emitting device (12) comprises at least one laser diode.

17. The light source (10) of any preceding claim, wherein the light emitting device (12) comprises a lamp.

18. The light source (10) of any preceding claim, wherein the light emitting device (12) emits photons of light having wavelengths shorter than 400nm.

19. The light source (10) of any preceding claim, wherein the light emitting device (12) emits photons of light having wavelengths in the range from 400nm to 425nm.

20. The light source (10) of any one of claims 1 to 19, wherein the quantum dot material (20) re-emits photons of light having wavelengths covering the range from 400nm to 700nm.

21. The light source (10) of any one of claims 1 to 19, wherein the emission spectrum of the light source (10) is within a narrow band of wavelengths.

22. The light source (10) of any one of claims 1 to 19, wherein the emission spectrum of the light source (10) corresponds to an adopted illumination standard.

23. The light source (10) of claim 22, wherein the adopted illumination standard is selected from the group consisting of an incandescent illumination standard, a daylight illumination standard and a fluorescent illumination standard.

24. An apparatus (30) for measuring a spectroscopic property of a target material (32) comprising:
the light source (10) of any preceding claim for emitting light photons to impinge upon the target material (32); and,
an optical radiation sensing device (36) for detecting at least one of light reflected by or transmitted through the target material (32).
